# FASCICULE DE BREVET EUROPEEN

(11) **EP 0 850 554 B1**
(45) Date de publication et mention de la délivrance du brevet: **20.03.2002**
(21) Numéro de dépôt: 97410146.1
(22) Date de dépôt: 19.12.1997
(51) Int. Cl.: A01B 43/00

(54) **Machine d'épierrement**
Steinsammler
Stone gathering machine

(30) Priorité: 20.12.1996 FR 9616064
(43) Date de publication de la demande: 01.07.1998
(73) Titulaire: Jaussaud, Jean-Emile, 05500 Saint Laurent du Cros (FR)
(72) Inventeur: Jaussaud, Jean-Emile, 05500 Saint Laurent du Cros (FR)
(74) Mandataire: de Beaumont, Michel

(56) Documents cités:
- AU-B- 264 174
- FR-A- 2 656 764
- GB-A- 1 433 396
- GB-A- 2 223 655
- US-A- 1 578 600
- US-A- 2 213 370
- US-A- 2 491 079
- US-A- 2 781 623
- US-A- 2 793 482
- US-A- 2 806 541

## Description

La présente invention concerne une machine d'épierrement destinée à être utilisée en accessoire d'un tracteur agricole et, plus généralement, dans des applications de traitement et de préparation d'un sol, par exemple, dans des travaux de terrassement.

L'épierrage d'un champ de culture est une opération qui doit être répétée régulièrement pour éliminer, de la strate de surface du champ, les pierres qui ont tendance à remonter à la surface. La présence de pierres dans un champ est gênante, non seulement pour les cultures proprement dites en créant des zones mortes, mais également pour l'utilisation d'outils agricoles qui risquent d'être endommagés par la présence de pierres.

Les machines d'épierrement classiques sont destinées à former des sillons, ou andains, de pierres d'un côté de la machine par rapport à son sens de progression. Ces machines sont généralement appelées des andaineuses.

Par exemple, le document FR-A-2684263 décrit une andaineuse classique. Cette andaineuse est constituée d'un châssis relié à l'attelage d'un véhicule tracteur et portant un peigne à pointes alignées et inclinées vers le sol. Les pointes se plantent dans le sol et soulèvent les pierres de taille supérieure à l'espace entre les pointes du peigne. Les pierres sont entraînées par accumulation vers l'arrière du peigne où elles sont entraînées vers un des côtés du peigne pour être déversées sur le sol afin de former des andains de pierres.

Un inconvénient d'une andaineuse est que la collecte des andains de pierres nécessite le recours à une ramasseuse destinée à recueillir les pierres dans une benne en passant sur les sillons de pierres. L'emploi d'une ramasseuse d'andains nécessite un deuxième passage complet dans le champ le long des sillons. Un tel nouveau passage en sillon dans le champ présente plusieurs inconvénients.

Un premier inconvénient est que la ramasseuse doit elle-même être pourvue d'un mécanisme de grille pour restituer, au sol, la strate de surface dans lequel sont présentes toutes les substances nutritives nécessaires à la culture, et est donc de constitution complexe.

Un deuxième inconvénient est que la nécessité de repasser derrière l'andaineuse en suivant son cheminement en sillons rend l'opération d'épierrage plus longue en temps/machine.

Le document US-A-2 213 370 décrit une machine d'épierrement par ramassage des pierres, pourvue d'un train de roulement arrière monté à pivotement.

Les documents GB-A-14 433 396 et US-A-2 781 623 décrivent des machines à casser les pierres pourvues d'un train de roulement arrière monté à pivotement.

Le document FR-A-2 656 764 décrit une ramasseuse de pierres pourvue d'un bras d'attelage monté à pivotement sur le châssis pour régler la profondeur d'enfoncement d'un râteau dans le sol.

La présente invention vise à proposer une nouvelle machine d'épierrement qui permette de simplifier l'épierrage d'un terrain.

La présente invention vise également à proposer une machine d'épierrement qui ne nécessite pas une deuxième passe en sillon dans un terrain soumis à une opération d'épierrage.

La présente invention vise également à proposer une machine d'épierrement de constitution simple.

La présente invention vise également à proposer une machine d'épierrement réglable en fonction de la profondeur de fouille souhaitée.

Pour atteindre ces objets, la présente invention prévoit une machine d'épierrement du type comportant un châssis propre à être attelé à un véhicule tracteur. Le châssis porte, à pivotement, selon des axes parallèles entre eux et perpendiculaires à une direction longitudinale de la machine, un bras d'attelage du châssis, au moins un premier râteau à pierres et un train de roulement arrière, les positions respectives, par rapport au châssis, de ces éléments qu'il porte à pivotement, étant commandables indépendamment les unes des autres.

Selon un mode de réalisation de la présente invention, le châssis comporte une première potence à l'extrémité libre de laquelle est montée, à pivotement, une première extrémité d'un premier vérin dont une seconde extrémité est reliée, à pivotement, au bras d'attelage au voisinage de son extrémité libre.

Selon un mode de réalisation de la présente invention, le train de roulement arrière comporte au moins un bras de liaison, dont une première extrémité est montée à pivotement sur le châssis et dont une deuxième extrémité est destinée à recevoir une roue.

Selon un mode de réalisation de la présente invention, le châssis comporte au moins une deuxième potence à une extrémité libre de laquelle est montée, à pivotement, une première extrémité d'au moins un deuxième vérin dont une seconde extrémité est reliée, à pivotement, au voisinage de la deuxième extrémité du bras de liaison du train de roulement arrière.

Selon un mode de réalisation de la présente invention, le train de roulement arrière est constitué, de chaque côté de la machine, d'une roue associée à un bras de liaison.

Selon un mode de réalisation de la présente invention, le premier râteau est associé à au moins un troisième vérin dont une première extrémité est montée, à pivotement, sur le châssis et dont une deuxième extrémité est montée, à pivotement, sur un élément arrière du râteau dans le sens de progression de la machine.

Selon un mode de réalisation de la présente invention, la machine comporte un deuxième râteau à pierres, parallèle au premier râteau dans le sens d'avancement de la machine et présentant un écart entre dents inférieur à l'écart entre des dents du premier râteau.

Selon un mode de réalisation de la présente invention, le deuxième râteau est monté à pivotement sur deux platines latérales, elles-mêmes montées à pivotement autour de l'axe de pivotement du premier râteau.

Selon un mode de réalisation de la présente invention, les platines latérales sont également reliées, par l'intermédiaire d'au moins un quatrième vérin à double-effet et à position flottante, au châssis de la machine, et portent, à basculement, des roulettes additionnelles de réglage de la profondeur d'enfoncement du deuxième râteau.

Selon un mode de réalisation de la présente invention, le ou les vérins sont chacun associés à une platine de pré-réglage de la position de leur deuxième extrémité.

Selon un mode de réalisation de la présente invention, le ou les râteaux sont pourvus de portions latérales d'extrémité, incurvées vers l'avant de la machine.

Selon un mode de réalisation de la présente invention, le ou les râteaux sont pourvus de jouées latérales à chacune de leurs extrémités libres.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
la figure 1 est une vue de côté d'une machine d'épierrement dans une position inactive selon un premier mode de réalisation de la présente invention ;
la figure 2 est une vue schématique de dessus de la machine représentée à la figure 1 ;
la figure 3 est une vue de côté de la machine représentée à la figure 1 en position active ;
la figure 4 est une vue de côté de la machine représentée à la figure 1 dans une position de déversement ;
la figure 5 représente une machine d'épierrement en position active selon un deuxième mode de réalisation de la présente invention ; et
les figures 6 et 7 représentent, en perspective, un mode de réalisation d'un râteau à pierres d'une machine d'épierrement selon la présente invention.

Les mêmes éléments ont été désignés par les mêmes références aux différentes figures. Pour des raisons de clarté, seuls les éléments nécessaires à la compréhension de l'invention ont été représentés aux figures et seront décrits par la suite.

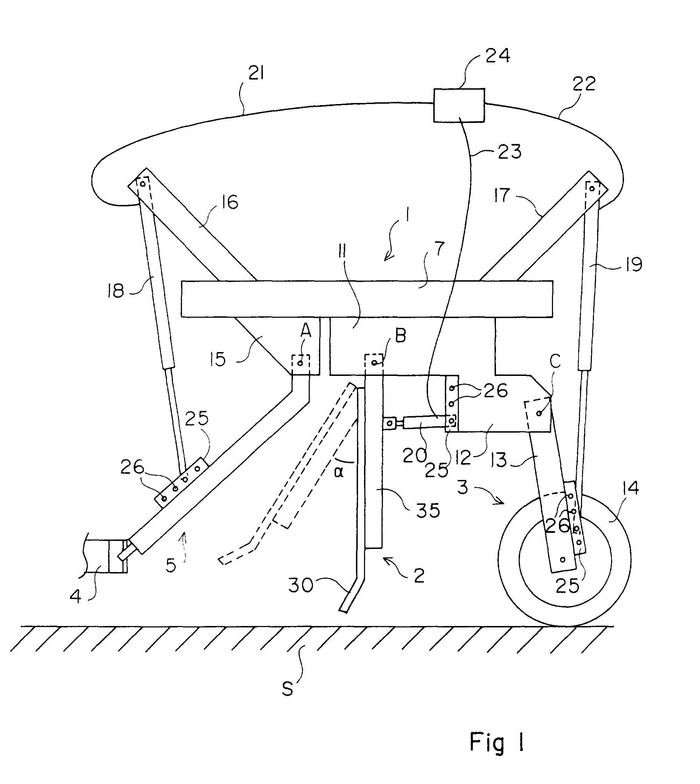

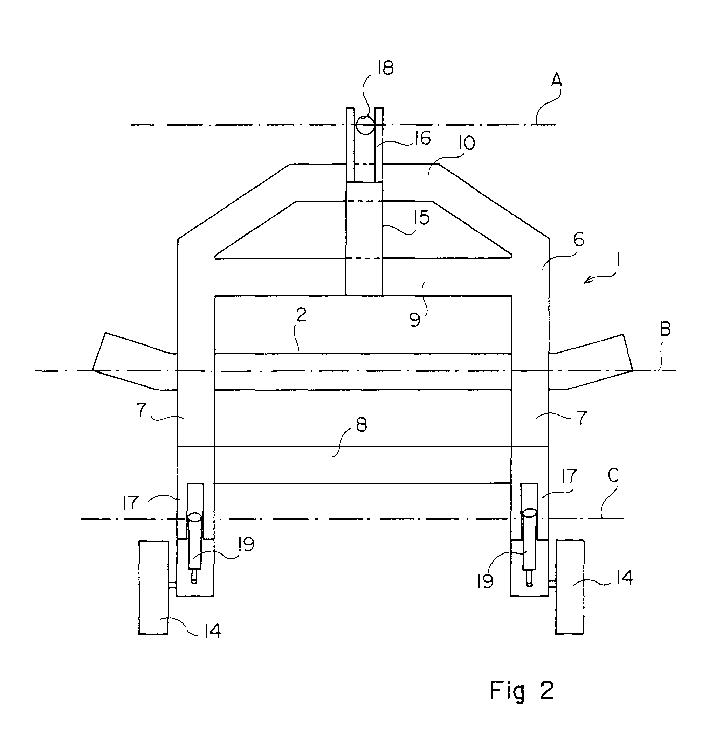

Les figures 1 et 2 représentent, respectivement vu de côté et de dessus, un premier mode de réalisation d'une machine d'épierrement selon la présente invention.

La machine est constituée d'un châssis 1 destiné à porter un râteau à pierres 2 propre à être enfoncé dans un sol S pour en extraire des pierres. Le châssis 1 est associé à un train 3 de roulement arrière et est destiné à être attelé à un attelage 4 d'un tracteur (non représenté) par l'intermédiaire d'un bras d'attelage 5.

Une caractéristique de la présente invention est que le râteau 2, le train de roulement arrière 3 et le bras d'attelage 5 sont reliés à pivotement au châssis 1 selon des axes respectifs A, B et C parallèles entre eux et perpendiculaires à une direction longitudinale de la machine correspondant à sa direction de progression.

Pour limiter le poids de la machine tout en lui conférant une excellente tenue mécanique, le châssis 1 est, de préférence, formé d'un cadre 6 (figure 2), par exemple, à partir de profilés métalliques en forme de U assemblés de manière adaptée. Dans l'exemple représenté à la figure 2, le cadre 6 comporte deux longerons latéraux 7, une traverse arrière 8, une traverse intermédiaire 9, et une traverse avant 10 conférant au châssis une forme légèrement effilée vers l'avant.

Dans l'exemple représenté, chaque longeron 7 présente un prolongement 11 (figure 1) dirigé vers le bas et destiné au montage, à pivotement, du râteau 2.

De préférence, le train 3 est constitué, de chaque côté de la machine, d'un bras 13 dont une première extrémité est montée à pivotement autour de l'axe C sur une partie arrière 12 d'un prolongement 11 et dont une deuxième extrémité reçoit une roue 14. Ainsi, aucun obstacle n'est présent derrière le râteau 2 dans sa partie centrale.

Selon l'invention, la partie avant du châssis 1, par exemple la traverse 9, porte un support 15 destiné à suspendre à pivotement autour de l'axe A, le bras d'attelage 5.

Selon l'invention, le châssis 1 comporte, en saillie vers le haut de la machine, des potences 16 et 17 de montage de vérins 18, 19 de réglage des inclinaisons respectives du bras 5 et des bras 3. Une potence 16, destinée à être associée au bras 5 par l'intermédiaire du vérin 18, est inclinée vers l'avant de la machine avec un angle compris, de préférence, entre 30 et 60°, par exemple de 45°, par rapport au plan défini par le cadre 6. La potence 16 est, par exemple, portée par la traverse 9 et reçoit, à son extrémité libre, une première extrémité du vérin 18 montée à pivotement. Une deuxième extrémité du vérin 18 est reliée, également à pivotement, au bras d'attelage 5 dans sa partie distale de l'axe A. A l'arrière de la machine, chaque longeron 7 porte une potence 17 associée à un bras 13. Les potences 17 sont inclinées vers l'arrière de la machine, de préférence, avec un angle de l'ordre de 30 à 60°, par exemple de 45°, par rapport au plan défini par le cadre 6. L'extrémité libre de chaque potence 17 reçoit à pivotement une première extrémité d'un vérin 19 dont une deuxième extrémité est reliée, également à pivotement, à un bras 13 dans sa partie distale de l'axe C.

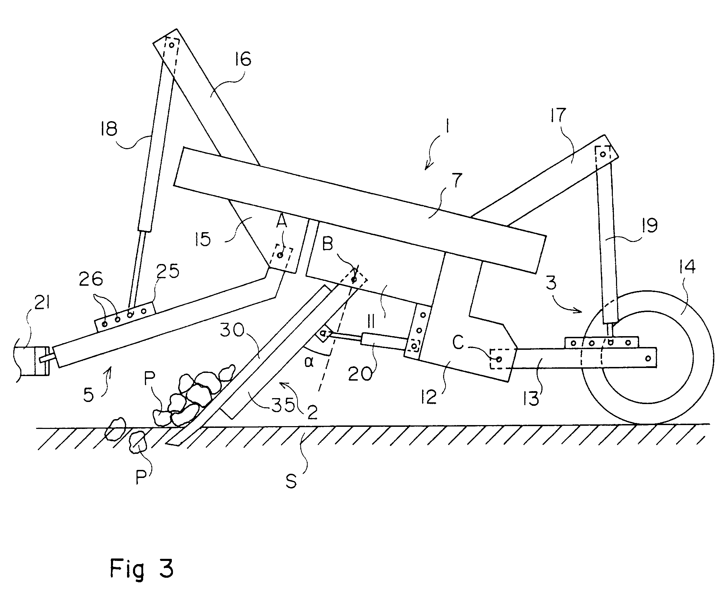

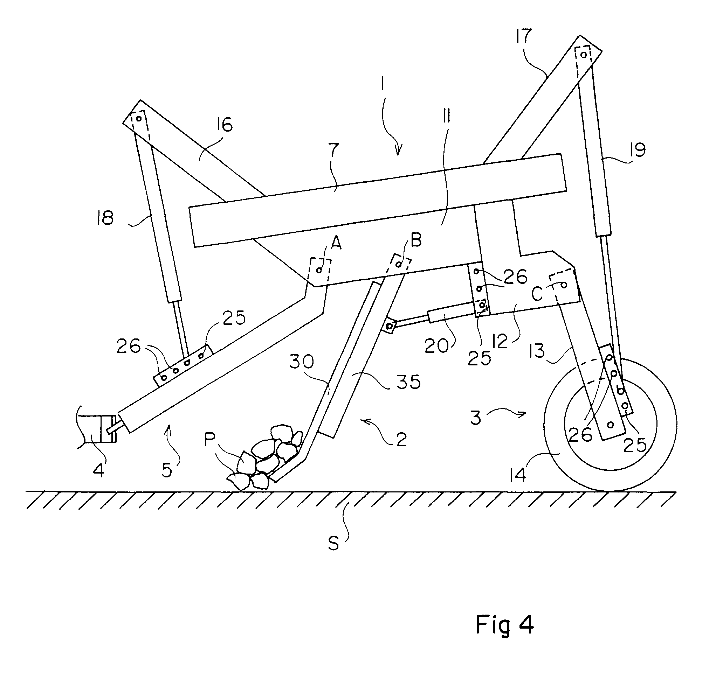

Le rôle des vérins 18 et 19 est de modifier la position en hauteur et en inclinaison du râteau 2 par rapport au sol S en modifiant les positions en hauteur de l'avant et/ou de l'arrière du châssis 1 par rapport au sol comme on le verra par la suite en relation avec les figures 3 et 4.

Le râteau 2 est associé à au moins un vérin 20 de réglage de son inclinaison. Dans l'exemple représenté, le râteau 2 est associé à deux vérins 20 dont des premières extrémités respectives sont reliées à pivotement à la partie arrière 12 d'un prolongement 11, de part et d'autre de la machine, et dont des deuxièmes extrémités respectives sont reliées au râteau dans sa partie arrière. La course des vérins 20 est telle qu'ils permettent un pivotement du râteau 2 entre une position où il est perpendiculaire au cadre 6 et une position où il est incliné de l'ordre de 30 à 60° par rapport à cette perpendiculaire.

De préférence, la position d'une des extrémités (par exemple, l'extrémité libre de la tige coulissante) de chaque vérin 18, 19, 20 est réglable le long de l'élément (bras 5, bras 13, partie arrière 12) qui le supporte pour effectuer un pré-réglage de la machine. Cela permet, par exemple, de pré-régler la hauteur par rapport au sol des parties avant et arrière du châssis 1 lorsque les vérins 18 et 19 sont dans une position allongée pour que le râteau 2 ne touche pas le sol lorsqu'il est mis dans une position verticale au moyen des vérins 20.

Dans le mode de réalisation représenté, les moyens de pré-réglage associé aux différents vérins sont constitués de platines 25 de réception des tiges respectives des vérins. Chaque platine 25 comporte une pluralité d'orifices 26 de montage, à pivotement, de la tige du vérin qui lui est associé, au moyen d'un axe non représenté.

On notera que ce pré-réglage peut modifier les plages d'inclinaison apportées par les vérins. Par exemple, le râteau 2 pourra être incliné vers l'arrière de la machine quand les vérins 20 sont rétractés, en utilisant, pour relier le corps du vérin 20 au châssis 1, l'orifice 26 le plus éloigné du point de liaison des vérins 20 au râteau 2.

Une caractéristique de la présente invention est que le râteau n'est pas incliné vers un des côtés de la machine de manière à empêcher la formation d'andains lors de l'épierrage.

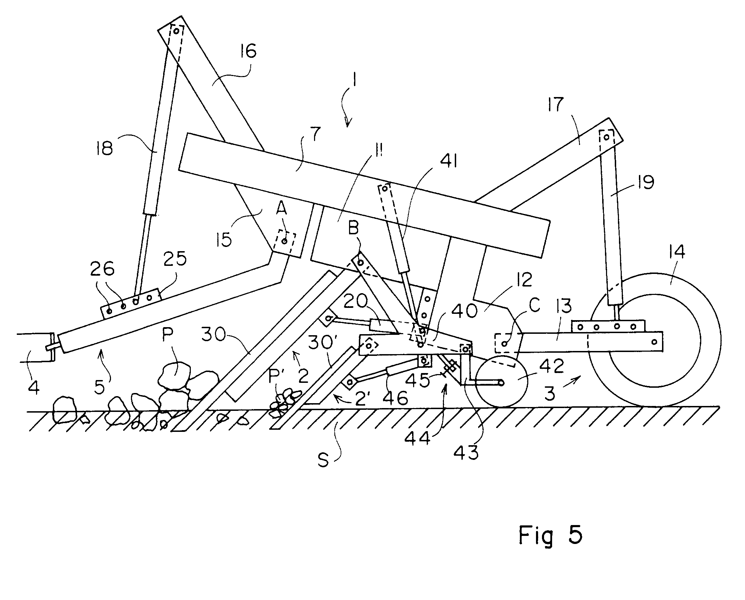

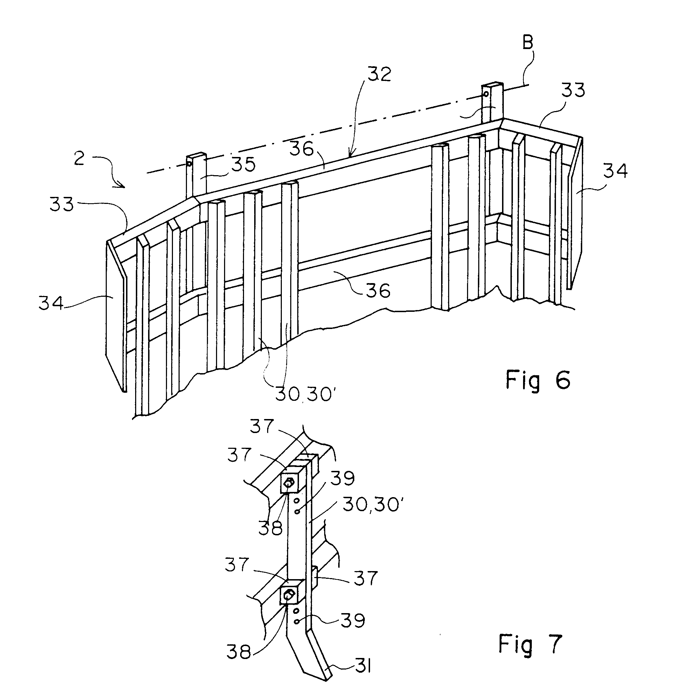

Le râteau 2 peut être un peigne à dents classique dont l'écartement des dents est adapté en fonction de la taille minimale des pierres que l'on souhaite ramasser. Toutefois, on préférera, selon l'invention, utiliser un râteau dont les deux extrémités longitudinales sont incurvées vers l'avant de la machine comme l'illustre la figure 2 pour empêcher les pierres de s'échapper par les côtés du râteau lors de l'épierrage. Un mode de réalisation préféré d'un râteau selon la présente invention sera décrit en relation avec les figures 5 et 6.

Les figures 3 et 4 illustrent le fonctionnement d'une machine d'épierrement selon la présente invention. La figure 3 représente la machine dans une position de ramassage de pierres et la figure 4 représente la machine dans une position intermédiaire lors d'un déversement, en tas, des pierres ramassées.

On commence par pré-régler l'inclinaison du râteau 2 au moyen des vérins 20 en l'inclinant, par exemple, d'un angle α vers l'avant de la machine par rapport à la verticale quand le cadre 7 est en position horizontale. On rétracte ensuite les vérins 19 pour provoquer un affaissement de l'arrière de la machine et, par ce biais, un enfoncement du râteau dans le sol S. La profondeur d'enfoncement du râteau 2 et son inclinaison par rapport au sol est ajustée au moyen du vérin 18 qui permet un abaissement plus ou moins important de l'extrémité avant du châssis.

Lorsque la machine est tractée vers l'avant, le râteau 2 provoque un soulèvement des pierres P contenues dans le sol sur une profondeur correspondant à la profondeur d'enfoncement du râteau, et ces pierres s'accumulent contre le râteau 2 au fur et à mesure du déplacement de la machine. Quand la quantité de pierres accumulée nécessite un déversement de celles-ci, on actionne les vérins 19 pour provoquer un relevage de l'arrière de la machine (figure 4) et, par ce biais, un déversement des pierres sur le sol.

Le relevage de l'arrière de la machine a un double effet. En premier lieu, il sort le râteau du sol en l'entraînant vers l'arrière de la machine pour éviter tout coincement du râteau dans le tas de pierres. En second lieu, il entraîne le râteau 2 dans une orientation plus verticale de manière à provoquer la descente, vers le sol, des pierres accumulées. Une fois que les pointes du râteau ne sont plus enfoncées dans le sol, le déversement du tas de pierres peut être favorisé par une rétraction du vérin 20 qui entraîne le râteau vers l'arrière en le rendant de plus en plus vertical. Une extension du vérin 18 permet alors de dégager le râteau 2 du tas de pierres et, selon la hauteur du râteau 2, le vérin 20 est de nouveau actionné dans le sens d'un allongement pour relever les extrémités libres des pointes comme l'illustrent les pointillés de la figure 1, afin de permettre le passage du tas de pierres en faisant avancer le tracteur. Le fait qu'aucun obstacle ne soit présent derrière le râteau 2 grâce à l'agencement du train de roulement arrière 3 permet de dégager la machine du tas de pierres sans difficulté.

Un avantage de la présente invention est qu'elle permet de regrouper, directement en tas, les pierres d'un terrain pour que ces pierres soient ensuite ramassées sans recourir à une nouvelle passe en sillon dans le terrain. On pourra, par exemple, utiliser une pelle mécanique pour ramasser les tas de pierres et les déverser dans la benne d'un camion ou dans une remorque de tracteur. On pourra également utiliser une fourche à pierres adaptée, montée sur l'attelage hydraulique d'un tracteur.

Un autre avantage de la présente invention est qu'en évitant la formation d'andains de pierres, elle rend le ramassage des pierres beaucoup moins contraignant dans la mesure où il n'est pas nécessaire de veiller à restituer au sol sa strate de surface sur tous les sillons du terrain. Le ramassage des pierres regroupées par tas disparates peut donc s'effectuer avec moins de précautions à cet égard, sans nuire aux cultures ultérieures.

Un autre avantage de la présente invention est qu'un même châssis peut recevoir des râteaux de différentes tailles, c'est-à-dire présentant des pas d'écartement différents entre leurs pointes pour adapter la machine d'épierrement à la taille des pierres que l'on souhaite récolter dans un champ particulier.

Les vérins 18, 19 et 20 sont commandés depuis le tracteur (non représenté), par exemple, par l'intermédiaire de liaisons pneumatiques ou hydrauliques, respectivement 21, 22 et 23 qui relient les vérins 18, 19 et 20 à un système 24 de commande pneumatique ou hydraulique associé au tracteur. Les liaisons 21, 22 et 23 ont été représentées schématiquement à la figure 1 par souci de simplification. On notera que chaque liaison comporte deux conduites, les vérins étant des vérins double-effet. Le système de commande est, par exemple, un distributeur hydraulique à 3 fonctions double-effet qui son respectivement associées au vérin 18, aux vérins 19 et aux vérins 20. Le cas échéant, la machine pourra elle-même être associée à un système de commande pneumatique ou hydraulique. Dans ce cas, seules des liaisons électriques sont nécessaires entre la machine et le tracteur pour transmettre des signaux de commandes depuis le tracteur jusqu'au système de commande.

La figure 5 représente un deuxième mode de réalisation d'une machine d'épierrement selon la présente invention. Une caractéristique de ce mode de réalisation est que le châssis 1 porte deux râteaux parallèles 2 et 2'. Un premier râteau 2, situé vers l'avant dans le sens de progression de la machine, a des pointes 30 disposées avec un pas d'écartement supérieur par rapport à celles 30' d'un deuxième râteau 2' situé plus vers l'arrière. Dans ce mode de réalisation, le râteau 2 ramasse les grosses pierres P tandis que le râteau 2' affine le travail en ramassant des pierres P' de taille inférieure.

Le deuxième râteau 2' pourra être rendu solidaire du premier râteau 2 pour être commandé par les mêmes organes.

On préférera toutefois, comme le représente la figure 5, rendre le deuxième râteau 2' réglable en profondeur et en inclinaison indépendamment du premier râteau 2, tout en permettant un relevage simultané des deux râteaux.

Pour ce faire, le râteau 2' est monté, par ses extrémités, à pivotement autour d'un axe D, sur deux platines latérales 40, elles-mêmes montées à pivotement sur l'axe B de liaison du râteau 2 au châssis 1. Chaque platine 40 est, par ailleurs, reliée au châssis 1 par un vérin 41. De préférence, les vérins 41 sont à double-effet et possèdent une position flottante. La profondeur de pénétration du râteau 2' est fixée par des roulettes additionnelles 42 montées sur des prolongements basculants 43 des platines 40. L'orientation des prolongements 43 par rapport aux platines 40 est, par exemple, fixé par un système 44 de réglage télescopique multi-positions, par exemple à vis 45. L'inclinaison du râteau 2' par rapport aux platines 40 est, par exemple, fixé par un ou plusieurs vérins 46, jouant un rôle similaire aux vérins 20 du premier râteau 2.

En position active, les vérins 41 sont flottants. Les platines 40 sont donc libres de pivoter autour de l'axe B et les roulettes 42 reposent sur le sol S et fixent la profondeur d'enfoncement du râteau 2' dans le sol S. De préférence, la course des vérins 41 est choisie pour que le râteau 2' soit relevé automatiquement lors du relevage du châssis 1. Les vérins 41 et 46 peuvent, de préférence, être commandés (par des liaisons non représentées) indépendamment des autres vérins 18, 19, 20 de la machine. Le distributeur hydraulique est alors un distributeur à 5 fonctions double-effet dont une fonction double-effet possède une position flottante. Ainsi, l'utilisation du râteau 2' est optionnelle même si la machine en est pourvue, le râteau 2' pouvant être relevé en rétractant les vérins 41 alors même que le châssis 1 est en position active.

Les figures 6 et 7 représentent, par des vues partielles en perspective, un mode de réalisation préféré d'un râteau à pierres selon la présente invention.

Le râteau est constitué d'une pluralité de pointes, ou dents 30 (ou 30') parallèles, dont une extrémité (31, figure 7) est libre et est, de préférence, effilée et dirigée vers l'avant.

Selon l'invention, les dents 30 sont montées sur un cadre support 32 réalisé, par exemple, au moyen de profilés métalliques assemblés de façon adaptée, dont des portions d'extrémité latérales 33 sont légèrement incurvées vers l'avant. Le rôle des portions incurvées 33 est de retenir les pierres à l'intérieur du râteau pour éviter la formation d'andains d'un côté ou des deux côtés du râteau. De préférence, les extrémités libres des portions 33 sont chacune pourvues d'une jouée 34 améliorant la retenue des pierres à l'intérieur du râteau. Le cadre est monté sur deux poteaux 35, de préférence, au voisinage des extrémités d'une portion centrale. Les poteaux 35 sont destinés à monter le râteau 2 (ou 2'), à pivotement, autour de l'axe B du châssis (ou de l'axe D des platines 40, figure 5) d'une machine d'épierrement selon l'invention. Le cadre 32 comporte, par exemple, deux longerons 36 montés sur les poteaux 35. Le cas échéant, des traverses (non représentées) sont intercalées verticalement entre les longerons 36 pour rigidifier la structure.

Les dents 30 sont fixées aux faces avants respectives des longerons 36 par des moyens adaptés, non représentés à la figure 5 pour des raisons de clarté. Un exemple de moyen de fixation d'une dent 30 a été représenté à la figure 7. Dans cet exemple, une paire de platines de montage 37 est fixée sur la face avant de chaque longeron 36, les platines d'une même paire étant écartées d'un espace correspondant à l'épaisseur d'une dent 30. La dent est insérée entre les platines 37 et y est fixée, par exemple, au moyen d'un système 38 à boulon et écrou qui traverse les platines 37 et la dent 30. De préférence, la dent 30 est pourvue d'une pluralité d'orifices 39 de passage du boulon du système 38 pour permettre un pré-réglage en hauteur des dents du râteau.

Selon une variante de réalisation non représentée, chaque dent est renforcée dans sa partie basse, par exemple, au moyen d'un fer rond de haute résistance, soudé sur la partie avant de la dent et s'étendant, de préférence, depuis le voisinage de l'extrémité libre de la dent jusqu'au niveau du longeron inférieur 36. Un tel fer rond améliore le dégagement de la terre lors de l'épierrage, réduit le risque de coincement, entre deux dents voisines, de pierres ayant un diamètre voisin de l'écart entre les dents du râteau et renforce les dents dans leur partie la plus sollicitée.

Bien entendu, la présente invention est susceptible de diverses variantes et modifications qui apparaîtront à l'homme de l'art. En particulier, la réalisation particulière du châssis 1, décrite en relation avec les figures 1 et 2, pourra être modifiée pourvu que la fonctionnalité de la machine selon l'invention soit respectée. De même, les longueurs respectives des vérins 18, 19 et 20 et des différents éléments de liaison pivotants (bras 5, 13, poteaux 35) seront adaptés en fonction de l'application particulière de l'invention.

## Revendications

1. Machine d'épierrement du type comportant un châssis (1) propre à être attelé à un véhicule tracteur, **caractérisé en ce que** le châssis porte, à pivotement, selon des axes (A, B, C) parallèles entre eux et perpendiculaires à une direction longitudinale de la machine, un bras (5) d'attelage du châssis (1), au moins un premier râteau à pierres (2) et un train de roulement arrière (3), les positions respectives, par rapport au châssis, de ces éléments qu'il porte à pivotement, étant commandables indépendamment les unes des autres.

2. Machine d'épierrement selon la revendication 1, **caractérisée en ce que** le châssis (1) comporte une première potence (16) à l'extrémité libre de laquelle est montée, à pivotement, une première extrémité d'un premier vérin (18) dont une seconde extrémité est reliée, à pivotement, au bras d'attelage (5) au voisinage de son extrémité libre.

3. Machine d'épierrement selon la revendication 1 ou 2, **caractérisée en ce que** le train de roulement arrière (3) comporte au moins un bras (3) de liaison, dont une première extrémité est montée à pivotement (C) sur le châssis (1) et dont une deuxième extrémité est destinée à recevoir une roue (14).

4. Machine d'épierrement selon les revendications 2 et 3, **caractérisée en ce que** le châssis (1) comporte au moins une deuxième potence (17) à une extrémité libre de laquelle est montée, à pivotement, une première extrémité d'au moins un deuxième vérin (19) dont une seconde extrémité est reliée, à pivotement, au voisinage de la deuxième extrémité du bras de liaison (13) du train de roulement arrière (3).

5. Machine d'épierrement selon la revendication 3 ou 4, **caractérisée en ce que** le train de roulement arrière (3) est constitué, de chaque côté de la machine, d'une roue (14) associée à un bras de liaison (13).

6. Machine d'épierrement selon la revendication 4, **caractérisée en ce que** le premier râteau (2) est associé à au moins un troisième vérin (20) dont une première extrémité est montée, à pivotement, sur le châssis (1) et dont une deuxième extrémité est montée, à pivotement, sur un élément (35) arrière du râteau dans le sens de progression de la machine.

7. Machine d'épierrement selon l'une quelconque des revendications 2 à 6, **caractérisée en ce qu'**elle comporte un deuxième râteau à pierres (2'), parallèle au premier râteau (2) dans le sens d'avancement de la machine et présentant un écart entre dents (30') inférieur à l'écart entre des dents (30) du premier râteau.

8. Machine d'épierrement selon la revendication 7, **caractérisé en ce que** le deuxième râteau (2') est monté à pivotement (D) sur deux platines latérales (40), elles-mêmes montées à pivotement autour de l'axe (B) de pivotement du premier râteau (2).

9. Machine d'épierrement selon les revendications 6 et 8, **caractérisé en ce que** les platines latérales (40) sont également reliées, par l'intermédiaire d'au moins un quatrième vérin (41) à double-effet et à position flottante, au châssis (1) de la machine, et portent, à basculement, des roulettes additionnelles (42) de réglage de la profondeur d'enfoncement du deuxième râteau (2').

10. Machine d'épierrement selon l'une quelconque des revendications 2 à 9, **caractérisée en ce que** le ou les vérins (18, 19, 20) sont chacun associés à une platine (25) de pré-réglage de la position de leur deuxième extrémité.

11. Machine d'épierrement selon l'une quelconque des revendications 1 à 10, **caractérisée en ce que** le ou les râteaux (2, 2') sont pourvus de portions latérales (33) d'extrémité, incurvées vers l'avant de la machine.

12. Machine d'épierrement selon l'une quelconque des revendications 1 à 11, **caractérisée en ce que** le ou les râteaux (2, 2') sont pourvus de jouées latérales (34) à chacune de leurs extrémités libres.

## Claims

1. A stone removing machine of the type including a framework (1) adapted to be drawn by a tractor vehicle, **characterized in that** the framework pivotally carries, according to parallel axes (A, B, C) each perpendicular to a longitudinal direction of the machine, an arm (5) for attachment of the framework (1), at least one first stone rake (2) and a back wheel train (3), the respective positions with respect to the framework of these elements pivotally carried by the framework being controllable independently from one another.

2. The stone removing machine of claim 1, **characterized in that** the framework (1) includes a first bracket (16), at the free end of which is pivotally coupled a first end of a first jack (18), a second end of which is pivotally coupled to the attachment arm (5) in the vicinity of its free end.

3. The stone removing machine of claim 1 or 2, **characterized in that** the back wheel train (3) includes at least one connection arm (13), a first end of which is pivotally mounted (C) to the framework (1) and a second end of which is designed to receive a wheel (14).

4. The stone removing machine of claims 2 and 3, **characterized in that** the framework (1) includes at least one second bracket (17) at a free end of which is pivotally mounted a first end of at least one second jack (19), a second end of which is pivotally mounted in the vicinity of the second end of the connection arm (13) of the back wheel train (3).

5. The stone removing machine of claim 3 or 4, **characterized in that** the back wheel train (3) is formed, on either side of the machine, of a wheel (14) associated with a connection arm (13).

6. The stone removing machine of claim 4, **characterized in that** the first rake (2) is associated with at least one third jack (20), a first end of which is pivotally mounted on the framework (1) and a second end of which is pivotally mounted on a rear element (35) of the rake in the direction of progression of the machine.

7. The stone removing machine of any of claims 2 to 6, **characterized in that** it includes a second stone rake (2'), parallel to the first rake (2) in the direction of progression of the machine and having a tooth pitch (30') smaller than the tooth pitch (30) of the first rake.

8. The stone removing machine of claim 7, **characterized in that** the second rake (2') is pivotally mounted (D) on two lateral plates (40), themselves pivotally mounted about the pivoting axis (B) of the first rake (2).

9. The stone removing machine of claims 6 and 8, **characterized in that** the lateral plates (40) are also connected, via at least one fourth double-effect floating position jack (41), to the framework (1) of the machine, and tiltably carry additional rollers (42) for adjustment of the penetration depth of the second rake (2').

10. The stone removing machine of any of claims 2 to 9, **characterized in that** the jack or jacks (18, 19, 20) are each associated with a plate (25) for pre-adjusting the position of their second end.

11. The stone removing machine of any of claims 1 to 10, **characterized in that** the rake or rakes (2, 2') are provided with lateral end portions (33), curved towards the front of the machine.

12. The stone removing machine of any of claims 1 to 11, **characterized in that** the rake or rakes (2, 2') are provided with lateral plates (34) at each of their free ends.

## Patentansprüche

1. Vorrichtung zum Aufsammeln von Steinen des Typs mit einem an ein Zugfahrzeug ankuppelbaren Fahrgestell bzw. Chassis (1),
**dadurch gekennzeichnet, daß**
das Fahrgestell um zueinander parallele und zu einer Längsrichtung der Vorrichtung rechtwinklige Achsen (A, B, C) schwenkbar umfaßt: einen Kupplungsarm bzw. -stange (5) des Fahrgestells (1), wenigstens einen ersten Steinsammelrechen (2), und einen Hinterradsatz (3), wobei die jeweiligen Stellungen dieser Elemente bezüglich dem sie tragenden Fahrgestell unabhängig voneinander steuerbar sind.

2. Steinsammelvorrichtung nach Anspruch 1, **dadurch gekennzeichnet, daß** das Fahrgestell (1) einen ersten Ausleger- bzw. Trägerarm (16) aufweist, an dessen freiern Ende schwenkbar das erste Ende eines ersten Hub- bzw. Hydraulikaggregats (18) befestigt ist, dessen zweites Ende schwenkbar mit dem Kupplungsarm bzw. der Kupplungsstange (5) benachbart von deren freiem Ende verbunden ist.

3. Steinsammelvorrichtung nach Anspruch 1 oder 2, **dadurch gekennzeichnet, daß** der Hinterradsatz (3) wenigstens einen Verbindungsarm (13) aufweist, der mit einem ersten Ende schwenkbar (C) an dem Fahrgestell (1) angebracht ist und der mit einem zweiten Ende zur Aufnahme eines Rads (14) vorgesehen ist.

4. Steinsammelvorrichtung nach den Ansprüchen 2 und 3, **dadurch gekennzeichnet, daß** das Fahrgestell (1) wenistens einen zweiten Ausleger- bzw. Trägerarm (17) aufweist, an dessen freiem Ende schwenkbar ein erstes Ende wenigstens eines zweiten Hub- bzw. Hydraulikaggregats (19) befestigt ist, von welchem ein zweites Ende schwenkbar mit dem Bereich nahe dem zweiten Ende des Verbindungsarms (13) des Hinterradsatzes (3) verbunden ist.

5. Steinsammelvorrichtung nach Anspruch 3 oder 4, **dadurch gekennzeichnet, daß** der Hinterradsatz (3) auf jeder Seite der Vorrichtung aus einem einem Verbindungsarm (13) zugeordneten Rad (14) besteht.

6. Steinsammelvorrichtung nach Anspruch 4, **dadurch gekennzeichnet, daß** der erste Rechen (2) wenigstens einem dritten Hub- bzw. Hydraulikagregat (20) zugeordnet ist, von dem ein erstes Ende schwenkbar auf dem Fahrgestell (1) und von dem ein zweites Ende schwenkbar auf einem in Fortbewegungsrichtung der Vorrichtung hinteren Teil (35) des Rechens angebracht ist.

7. Steinsammelvorrichtung nach einem der Ansprüche 2 bis 6, **dadurch gekennzeichnet, daß** diese einen in Fortbewegungsrichtung der Vorrichtung zum ersten Rechen (2) parallelen zweiten Steinrechen (2') aufweist, der einen kleineren Zinkenabstand (30') als der Zinkenabstand (30) des ersten Rechens besitzt.

8. Steinsammelvorrichtung nach Anspruch 7, **dadurch gekennzeichnet, daß** der zweite Rechen (2') schwenkbar (D) auf zwei seitlichen Platinen (40) angeordnet ist, die ihrerseits um die Schwenkachse (B) des ersten Rechens (2) schwenkbar angeordnet sind.

9. Steinsammelvorrichtung nach den Ansprüchen 6 und 8, **dadurch gekennzeichnet, daß** die seitlichen Platinen (40) gleichzeitig auch mit Hilfe wenigstens eines doppelt wirkenden vierten Hub- bzw. Hydraulikaggregats (41) mit Gleitstellung mit dem Fahrgestell (1) verbunden sind und schwenkbar zusätzliche Rollen (42) zur regelbaren Einstellung der Eindringtiefe des zweiten Rechens (2') tragen.

10. Steinsammelvorrichtung nach einem der Ansprüche 2 bis 9, **dadurch gekennzeichnet, daß** das bzw. Die Hub- bzw. Hydraulikaggregate (18, 19, 20) jedes jeweils mit einer Platine (25) zur Voreinstellung der Lage seines bzw. ihres zweiten Endes versehen ist bzw. sind.

11. Steinsammelvorrichtung nach einem der Ansprüche 1 bis 10, **dadurch gekennzeichnet, daß** der bzw. die Rechen (2, 2') mit zum Vorderteil der Vorrichtung gekrümmten seitlichen Endteilen (33) versehen ist bzw. sind.

12. Steinsammelvorrichtung nach einem der Ansprüche 1 bis 11, **dadurch gekennzeichnet, daß** der bzw. die Rechen (2, 2') an seinem/ihren freien Ende(n) mit seitlichen Leitplatten (34) versehen ist bzw. sind.
